# EUROPEAN PATENT APPLICATION

(11) **EP 4 458 542 A1**
(43) Date of publication of application: **06.11.2024**
(21) Application number: 22915620.3
(22) Date of filing: 01.12.2022
(51) Int. Cl.: B29B 11/16, B29K 101/10

(54) **FIBER-REINFORCED COMPOSITE MATERIAL MANUFACTURING METHOD, FIBER-REINFORCED COMPOSITE MATERIAL, AND MOLDED ARTICLE MANUFACTURING METHOD**

(30) Priority: 27.12.2021 JP 2021212278
(71) Applicant: DIC Corporation, Tokyo 174-8520 (JP)
(72) Inventor: NAGATA, Kouji, Takaishi-shi, Osaka 592-0001 (JP); HITOMI, Kazutoshi, Takaishi-shi, Osaka 592-0001 (JP); HAMADA, Kenichi, Takaishi-shi, Osaka 592-0001 (JP)
(74) Representative: TBK
(86) International application number: PCT/JP2022/044316
(87) International publication number: WO 2023/127389

(57) **Abstract**

The present invention relates to a method for manufacturing a fiber-reinforced composite material by impregnating reinforcing fibers with a resin composition. The method includes steps of: laminating the reinforcing fibers and the resin composition on a carrier film to prepare a laminate; and pressing and advancing the laminate while rotating a plurality of impregnation rolls to impregnate the reinforcing fibers with the resin composition. At least two impregnation rolls adjacent to each other among the impregnation rolls have projecting and depressed grooves on respective surfaces. Between a projection and a projection on a surface of one of the two impregnation rolls adjacent to each other, a projection on a surface of the other of the two impregnation rolls adjacent to each other is disposed. The impregnation rolls are substantially on the same plane.

## Description

### Technical Field

The present invention relates to a method for manufacturing a fiber-reinforced composite material, a fiber-reinforced composite material obtained by the manufacturing method, and a method for manufacturing a molded article obtained by using the fiber-reinforced composite material.

### Background Art

In recent years, fiber-reinforced composite materials made of thermosetting resins such as epoxy resins and unsaturated polyester resins reinforced with carbon fibers as reinforcing fibers have been attracting attention because of their characteristics including high heat resistance and high mechanical strength while being lightweight. Such fiber-reinforced composite materials are widely used in housing materials, automotive parts, electrical components, and the like.

As for the fiber-reinforced composite materials, one of known methods for molding a material using an epoxy resin is an autoclave method involving heating and curing a molding material called prepreg in an autoclave capable of pressurizing the material. One of known methods for molding a material using an unsaturated polyester resin is a method involving curing and molding an intermediate material called sheet molding compound (SMC) by press molding, injection molding, or other methods. In particular, in recent years, materials with excellent productivity have been actively developed.

The SMC is obtained, for example, by: sandwiching reinforcing fibers made of cut glass fibers, carbon fibers, or the like between two resin compound layers with a certain thickness formed by applying a liquid resin compound (resin composition) composed of an unsaturated polyester resin, an inorganic filler, a hardener, a thickener, and other additives on carrier films by a doctor knife method or the like; impregnating the reinforcing fibers with the resin compound; rolling the resulting product; and then thickening (B-staging) the resin. A sheet-like molding material (SMC) with ease of handling is thus obtained as a fiber-reinforced composite material. The resin compound (resin composition) is required to be liquid when applied at a certain thickness on the carrier film and to form a sheet-like molding material (SMC) after impregnating the reinforcing fibers and being thickened.

Among the above molding materials, carbon fiber-reinforced composite materials using carbon fibers as reinforcing fibers are in increasing demand as a material that reduces the weight of aircraft and other chassis as well as automotive parts and the like.

SMC using carbon fibers as reinforcing fibers often requires high strength and high modulus performance, and thus the carbon fiber content needs to be high, usually 40% by mass or more in the SMC. Carbon fibers are light in specific gravity and have a larger bulk density when cut. Since carbon fibers generally have low affinity for a resin compound, the resin compound needs to efficiently permeate the carbon fibers in order that the bulky, highly concentrated carbon fibers are impregnated with the resin compound.

As a method of impregnating the reinforcing fibers with a resin compound, for example, the resin compound is applied to a certain thickness on a release sheet to make a laminate, which is then pressed and impregnated using a rotating roll with numerous needle-like projections (PTL 1).

However, when carbon fibers are used as the reinforcing fibers, a section pressed by a mesh belt or a projection and depression roll may maintain its shape, and projections and depressions may be transferred to the surface of SMC, because the carbon fibers have a high tensile modulus but are flexible and soft and hardly return to the original linear state when the fibers are bent. If SMC is aged (B-staged) in this state, SMC with a projection and depression pattern left thereon is produced. If this SMC is molded, the projection and depression pattern may also be left on a surface of the molded article, resulting in a problem such as poor appearance.

### Citation List

### Patent Literature

PTL 1: Japanese Unexamined Patent Application Publication No. S62-73914

### Summary of Invention

### Technical Problem

An object of the present invention is to provide: a method for manufacturing a fiber-reinforced composite material that can avoid occurrence of a projection and depression pattern resulting from impregnation rolls in a sheet-like molding material (fiber-reinforced composite material) after B-staging and in a molded article obtained by using the fiber-reinforced composite material, by controlling arrangement of respective projections of impregnation rolls adjacent to each other and each having a surface with projecting and depressed grooves; a fiber-reinforced composite material obtained by the method for manufacturing a fiber-reinforced composite material; and a method for manufacturing a molded article obtained by using the fiber-reinforced composite material.

### Solution to Problem

The inventors of the present invention have found a method for manufacturing a fiber-reinforced composite material that can avoid occurrence of a projection and depression pattern resulting from impregnation rolls in a sheet-like molding material (fiber-reinforced composite material) after B-staging and in a molded article obtained by using the fiber-reinforced composite material, by controlling arrangement of respective projections of impregnation rolls adjacent to each other and each having a surface with projecting and depressed grooves. This finding has led to completion of the invention.

More specifically, the present invention relates to a method for manufacturing a fiber-reinforced composite material by impregnating reinforcing fibers with a resin composition. The method includes steps of: laminating the reinforcing fibers and the resin composition on a carrier film to prepare a laminate; and pressing and advancing the laminate while rotating a plurality of impregnation rolls to impregnate the reinforcing fibers with the resin composition. At least two impregnation rolls adjacent to each other among the impregnation rolls have projecting and depressed grooves on respective surfaces. Between a projection and a projection on a surface of one of the two impregnation rolls adjacent to each other, a projection on a surface of the other of the two impregnation rolls adjacent to each other is disposed. The impregnation rolls are substantially on a same plane.

It is preferable that the method for manufacturing a fiber-reinforced composite material of the present invention further includes a step of heating after impregnating the reinforcing fibers with the resin composition.

In the method for manufacturing a fiber-reinforced composite material of the present invention, it is preferable that among the impregnation rolls, a last roll in a direction of the advancing is a smooth roll.

In the method for manufacturing a fiber-reinforced composite material of the present invention, among the projecting and depressed grooves, a projection having a width larger than the width of a depression may be used.

In the method for manufacturing a fiber-reinforced composite material of the present invention, among the projecting and depressed grooves, a projection having a width smaller than the width of a depression may be used.

In the method for manufacturing a fiber-reinforced composite material of the present invention, it is preferable that the projection has a width increasing in a direction of the advancing.

The present invention relates to a fiber-reinforced composite material obtained by the method for manufacturing a fiber-reinforced composite material described above.

The present invention relates to a method for manufacturing a molded article obtained by using the fiber-reinforced composite material described above. Advantageous Effects of Invention

The method for manufacturing a fiber-reinforced composite material of the present invention can avoid occurrence of a projection and depression pattern resulting from impregnation rolls in a sheet-like molding material (fiber-reinforced composite material) after B-staging and in a molded article obtained by using the fiber-reinforced composite material, by controlling arrangement of respective projections of impregnation rolls adjacent to each other and each having a surface with projecting and depressed grooves. The fiber-reinforced composite material obtained by using the manufacturing method above is useful with excellent appearance.

### Brief Description of Drawings

FIG. 1 is a diagram illustrating a specific manufacturing step for implementing the present invention.
FIG. 2 is a plan view and a cross-sectional view of impregnation rolls included in a specific apparatus for implementing the present invention.

### Description of Embodiments

Embodiments of the present invention will be described in detail below.

### [Resin Composition]

A resin composition to be used in the method for manufacturing a fiber-reinforced composite material of the present invention is not limited but preferably a resin for use in applications of thermosetting resins and the like. For example, a vinyl ester resin, an unsaturated monomer, a polyisocyanate, and a polymerization initiator can be used as raw material components.

### [Vinyl Ester Resin]

The vinyl ester resin is obtained by reacting an epoxy resin with an unsaturated monomer (for example, (meth)acrylic acid). It is preferable to react the epoxy group (EP) of the epoxy resin and the carboxyl group (COOH) of the (meth)acrylic acid at a molar ratio (COOH/EP) in the range of 0.6 to 1.1, because the balance between flowability and ease of handling such as film releasability and tackiness during molding is excellent.

In terms of the above balance, the epoxy equivalent weight of the epoxy resin is preferably in the range of 170 to 360 g/eq and more preferably in the range of 180 to 280 g/eq.

In the present invention, "(meth)acrylic acid" refers to one or both of acrylic acid and methacrylic acid, and "(meth)acrylate" refers to one or both of acrylate and methacrylate.

Examples of the epoxy resin include bisphenol epoxy resins such as bisphenol A epoxy resin, bisphenol F epoxy resin, bisphenol fluorene epoxy resin, and biscresol fluorene epoxy resin, novolac epoxy resins such as phenol novolac epoxy resin and cresol novolac epoxy resin, oxazolidone modified epoxy resins, phenol glycidyls ethers such as brominated epoxy resins of these resins, polyol glycidyl ethers such as dipropylene glycol diglycidyl ether, trimethylolpropane triglycidyl ether, diglycidyl ether of alkylene oxide adduct of bisphenol A, and diglycidyl ether of hydrogenated bisphenol A, alicyclic epoxy resins such as 3,4-epoxy-6-methylcyclohexyl methyl-3,4-epoxy-6-methylcyclohexane carboxylate and 1-epoxyethyl-3,4-epoxycyclohexane, glycidyl esters such as diglycidyl phthalate ester, diglycidyl tetrahydrophthalate ester, diglycidyl-p-oxybenzoic acid, and dimer acid glycidyl ester, glycidyl amines such as tetraglycidyl diaminodiphenyl methane, tetraglycidyl-m-xylenediamine, triglycidyl-p-aminophenol, and N,N-diglycidylaniline, and heterocyclic epoxy resins such as 1,3-diglycidyl-5,5-dimethylhydantoin and triglycidylisocyanurate. Among these, bifunctional aromatic epoxy resins are preferred because molded article strength, ease of handling of the molding material, and flowability during molding of the molding material are more excellent. Bisphenol A epoxy resin and bisphenol F epoxy resin are more preferred. These epoxy resins can be used alone or in combination of two or more.

The epoxy resin may be used in such a manner that its molecular weight is increased using a dibasic acid such as bisphenol A in order to adjust the epoxy equivalent weight.

The reaction of the epoxy resin with (meth)acrylic acid is preferably performed at 60 to 140°C using an esterification catalyst. A polymerization inhibitor and the like can also be used. The vinyl ester resin can be obtained by the reaction of the epoxy resin with (meth)acrylic acid.

### [Unsaturated Monomer]

Examples of the unsaturated monomer include monofunctional (meth)acrylate compounds such as benzyl (meth)acrylate, phenoxyethyl (meth)acrylate, phenoxy polyethylene glycol (meth)acrylate, polyethylene glycol (meth)acrylate alkyl ether, polypropylene glycol (meth)acrylate alkyl ether, 2-ethylhexyl methacrylate, isodecyl (meth)acrylate, lauryl (meth)acrylate, isotridecyl (meth)acrylate, n-stearyl (meth)acrylate, tetrahydrofurfuryl methacrylate, isobornyl (meth)acrylate, dicyclopentenyloxyethyl (meth)acrylate, and dicyclopentanyl methacrylate; di(meth)acrylate compounds such as ethylene glycol di(meth)acrylate, propylene glycol di(meth)acrylate, 1,4-butanediol di(meth)acrylate, 1,3-butanediol di(meth)acrylate, neopentyl glycol di(meth)acrylate, 1,6-hexanediol di(meth)acrylate, bisphenol di(meth)acrylate, and 1,4-cyclohexanedimethanol di(meth)acrylate; diallyl phthalate, divinyl benzene, and styrene. Among these, unsaturated monomers with aromatic groups are preferred because a molding material with higher strength can be obtained, and benzyl methacrylate and phenoxyethyl methacrylate are more preferred. These unsaturated monomers can be used alone or in combination of two or more.

The mass ratio of the vinyl ester resin to the unsaturated monomer (vinyl ester resin/unsaturated monomer) is preferably in the range of 40/60 to 85/15, more preferably in the range of 50/50 to 70/30, because the impregnation of reinforcing fibers with the resin and the balance between ease of handling and curability are more improved.

### [Polyisocyanate]

Examples of the polyisocyanate include aromatic polyisocyanates such as diphenylmethane diisocyanate (4,4'-isomer, 2,4'-isomer, or 2,2'-isomer, or a mixture thereof), carbodiimide-modified, nurate-modified, biuret-modified, and urethaneimine-modified products of diphenylmethane diisocyanate, diphenylmethane diisocyanate modified products such as polyol-modified products modified with polyols with a number average molecular weight of 1,000 or less, such as diethylene glycol and dipropylene glycol, tolylene diisocyanate, tridine diisocyanate, polymethylene polyphenyl polyisocyanate, xylylene diisocyanate, 1,5-naphthalene diisocyanate, and tetramethyl xylene diisocyanate; alicyclic polyisocyanates such as isophorone diisocyanate, hydrogenated diphenylmethane diisocyanate, hydrogenated xylylene diisocyanate, and norbornene diisocyanate; and aliphatic polyisocyanates such as hexamethylene diisocyanate, nurate-modified product, biuret-modified product, and adduct of hexamethylene diisocyanate, and dimer acid diisocyanate. Among these, aromatic polyisocyanates are preferred because a molding material with excellent ease of handling (film releasability and tackiness) can be obtained. These polyisocyanates can be used alone or in combination of two or more.

The molar ratio (NCO/OH) of the isocyanate group (NCO) of the polyisocyanate to the hydroxyl group (OH) of the vinyl ester resin is preferably in the range of 0.5 to 0.95, and more preferably 0.55 to 0.85, because melt viscosity can be easily controlled.

### [Polymerization Initiator]

The polymerization initiator is not limited, but an organic peroxide is preferred. Examples include diacyl peroxide compounds, peroxyester compounds, hydroperoxide compounds, ketone peroxide compounds, alkyl perester compounds, percarbonate compounds, and peroxyketals. The polymerization initiator can be selected as appropriate according to molding conditions. These polymerization initiators can be used alone or in combination of two or more.

Among the organic peroxides above, it is preferable to use a polymerization initiator having a 10-hour half-life temperature of 70 to 110°C for the purpose of reducing a molding time. The above temperature range is preferable, because if so, the fiber-reinforced composite material has a long life at room temperature and can be cured in a shorter time by heating, and the balance between curability and moldability is more excellent. Examples of such a polymerization initiator include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butylperoxy diethyl acetate, t-butylperoxy isopropyl carbonate, t-amylperoxy isopropyl carbonate, t-hexylperoxy isopropyl carbonate, di-tert-butylperoxy hexahydro terephthalate, and t-amylperoxy trimethylhexanoate.

The content of the polymerization initiator is preferably in the range of 0.3 to 3% by mass of the total amount of the vinyl ester resin and the unsaturated monomer, because both curing characteristics and storage stability are excellent.

The resin composition may contain other than the vinyl ester resin, the unsaturated monomer, the polyisocyanate, and the polymerization initiator, such as a thermosetting resin other than the vinyl ester resin, a thermoplastic resin, a polymerization inhibitor, a curing accelerator, a filler, a low profile additive, a mold release agent, a thickener, a viscosity reducer, a pigment, an antioxidant, a plasticizer, a flame retardant, an antimicrobial agent, a UV stabilizer, a reinforcing material, and a light curing agent.

Examples of the thermosetting resin include vinyl urethane resin, unsaturated polyester resin, acrylic resin, epoxy resin, phenolic resin, melamine resin, and furan resin. These thermosetting resins can be used alone or in combination of two or more.

Examples of the thermoplastic resin include polyamide resin, polyethylene terephthalate resin, polybutylene terephthalate resin, polycarbonate resin, urethane resin, polypropylene resin, polyethylene resin, polystyrene resin, acrylic resin, polybutadiene resin, polyisoprene resin, and modified products thereof by copolymerization or the like. These thermoplastic resins can be used alone or in combination of two or more.

Examples of the polymerization inhibitor include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, and copper chloride. These polymerization inhibitors can be used alone or in combination of two or more.

Examples of the curing accelerator include metal soaps such as cobalt naphthenate, cobalt octenate, vanadyl octenate, copper naphthenate, and barium naphthenate, and metal chelate compounds such as vanadyl acetylacetate, cobalt acetylacetate, and iron acetylacetonate. Examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators can be used alone or in combination of two or more.

The filler includes inorganic and organic compounds and can be used to adjust physical properties such as molded article strength, elastic modulus, impact strength, and fatigue durability.

Examples of the inorganic compounds include calcium carbonate, magnesium carbonate, barium sulfate, mica, talc, kaolin, clay, celite, asbestos, barite, baryta, silica, silica sand, dolomite limestone, gypsum, aluminum fine powder, hollow balloon, alumina, glass powder, hydroxide aluminum, white limestone, zirconium oxide, antimony trioxide, titanium oxide, molybdenum dioxide, and iron powder.

Examples of the organic compounds include natural polysaccharide powders such as cellulose and chitin, and synthetic resin powders. As the synthetic resin powders, organic powders composed of hard resin, soft rubber, elastomer, polymer (copolymer), or the like, and particles with multilayer structures such as core-shell structure can be used. Specific examples include particles of butadiene rubber and/or acrylic rubber, urethane rubber, silicone rubber, and the like, polyimide resin powders, fluororesin powders, and phenolic resin powders. These fillers can be used alone or in combination of two or more.

Examples of the mold release agent include zinc stearate, calcium stearate, paraffin wax, polyethylene wax, and carnauba wax. Preferable examples include paraffin wax, polyethylene wax, and carnauba wax. These mold release agents can be used alone or in combination of two or more.

Examples of the thickener include metal oxides and metal hydroxides such as magnesium oxide, magnesium hydroxide, calcium oxide, and calcium hydroxide, and acrylic resin-based fine particles. These thickeners can be used alone or in combination of two or more.

The viscosity of the resin composition is preferably in the range of 200 to 8000 mPa·s (25°C), because resin impregnation in the reinforcing fibers is improved.

### [Reinforcing Fibers]

The reinforcing fibers are not limited but carbon fibers are preferred in terms of mechanical strength and durability. Various kinds such as polyacrylonitrile-based, pitch-based, and rayon-based fibers can be used because high-strength carbon fibers can be obtained. Among those, polyacrylonitrile-based fibers are more preferred because high-strength carbon fibers can be easily obtained.

Carbon fibers cut into lengths of 2.5 to 50 mm are used as the carbon fibers. Carbon fibers cut into 5 to 40 mm are more preferred because in-mold flowability during molding, and appearance and mechanical properties of molded articles are more improved.

The number of filaments in a fiber bundle used as the carbon fibers is preferably 1000 to 60000, because resin impregnation and mechanical properties of molded articles are more improved.

The content of the reinforcing fibers in the components of the fiber-reinforced composite material obtained by the method for manufacturing a fiber-reinforced composite material of the present invention is preferably in the range of 20 to 80% by mass, and more preferably in the range of 40 to 70% by mass, because mechanical strength of molded articles obtained from the resulting fiber-reinforced composite material is more improved. If the content of the reinforcing fibers is low, high-strength molded articles may fail to be obtained. If the content of the reinforcing fibers is high, resin impregnation into the fibers may be insufficient to cause swelling of molded articles, and in this case also, high-strength molded articles may fail to be obtained.

### [Method for Manufacturing Fiber-Reinforced Composite Material]

The present invention relates to a method for manufacturing a fiber-reinforced composite material by impregnating reinforcing fibers with a resin composition. The method includes steps of: laminating the reinforcing fibers and the resin composition on a carrier film to prepare a laminate; and pressing and advancing the laminate while rotating a plurality of impregnation rolls to impregnate the reinforcing fibers with the resin composition. At least two impregnation rolls adjacent to each other among the impregnation rolls have projecting and depressed grooves on respective surfaces. Between a projection and a projection on a surface of one of the two impregnation rolls adjacent to each other, a projection on a surface of the other of the two impregnation rolls adjacent to each other is disposed. The impregnation rolls are substantially on the same plane.

In the method for manufacturing a fiber-reinforced composite material of the present invention, it is preferable that at least two impregnation rolls adjacent to each other among the impregnation rolls have projecting and depressed grooves on respective surfaces, and between a projection and a projection on a surface of one of the two impregnation rolls adjacent to each other, a projection on a surface of the other of the two impregnation rolls adjacent to each other is disposed, because if so, a pressure on the laminate surface in contact with the impregnation rolls is distributed, and occurrence of a projection and depression pattern resulting from the impregnation rolls can be suppressed. On the other hand, it is undesirable if the projections of the adjacent impregnation rolls are disposed at the same respective positions, as in a previous example, because a pressure on the laminate surface in contact with the impregnation rolls is exerted on the same position to cause a projection and depression pattern resulting from the impregnation rolls.

Although a projection on a surface of the other of the two impregnation rolls adjacent to each other is disposed between a projection and a projection on a surface of one of the two impregnation rolls adjacent to each other, the projections adjacent to each other may partially overlap each other. The overlapping is preferable because if so, the surface of the laminate in contact with the projections is leveled into a flat shape, and occurrence of a projection and depression pattern resulting from the impregnation rolls is more likely to be suppressed.

In the method for manufacturing a fiber-reinforced composite material of the present invention, it is preferable that the impregnation rolls are substantially on the same plane, because if so, a pressure on the laminate surface in contact with the impregnation rolls is distributed, and occurrence of a projection and depression pattern resulting from the impregnation rolls can be suppressed. On the other hand, when there are a plurality of impregnation rolls which are not substantially on the same plane and there is a difference in height between adjacent impregnation rolls (for example, staggered arrangement) as in a previous example, a pressure may be exerted unevenly onto the laminate surface. In order to solve this, for example, various modifications need to be made to the shape of the impregnation rolls. This is undesirable because the workability is inferior and the price for the apparatus including impregnation rolls may be increased. As used herein "substantially" on the same plane means a difference in height within ±10% with respect to the diameter including projections of the impregnation roll.

As the impregnation rolls, at least two impregnation rolls adjacent to each other have projecting and depressed grooves on their respective surfaces, and a projection on a surface of the other of the two impregnation rolls adjacent to each other is disposed between a projection and a projection on a surface of one of the two impregnation rolls adjacent to each other. Otherwise, for example, the surfaces of all of multiple (n) impregnation rolls may have projecting and depressed grooves, and in all of the impregnation rolls, when viewed in the vertical direction, a projection of a second roll may be disposed between a projection and a projection on a surface of a first roll, and, similarly, a projection of a third roll may be disposed between a projection and a projection on a surface of the second roll. Further, a combination in which a fourth roll and a fifth roll do not meet the above condition and a sixth roll and a seventh roll meet the above condition may be employed as long as occurrence of a projection and depression pattern resulting from the impregnation rolls can be suppressed.

The projecting and depressed grooves of the two impregnation rolls adjacent to each other may all have the same shape or may have different shapes. When the projecting and depressed grooves have different shapes, it is preferable that the pitch of the arrangement of a projection and a projection on a surface of one of two impregnation rolls adjacent to each other is the same as the pitch of the arrangement of a projection on a surface of the other.

It is preferable that the method for manufacturing a fiber-reinforced composite material of the present invention further includes a step of heating (aging) after impregnating the reinforcing fibers with the resin composition.

In the method for manufacturing a fiber-reinforced composite material of the present invention, it is preferable to include the step of heating (aging) after impregnating the reinforcing fibers with the resin composition, together with the above manufacturing steps, because if so, a fiber-reinforced composite material is obtained as a B-staged sheet-like molding material (SMC), and workability and film releasability are excellent.

In the method for manufacturing a fiber-reinforced composite material of the present invention, it is preferable that among the impregnation rolls, a last roll in a direction of the advancing is a smooth roll.

It is preferable that among the impregnation rolls, the last roll in the advancing direction in which the laminate is pressed and advanced while rotating the impregnation rolls is a smooth roll, because if so, even when some projections and depressions occur before the sheet-like molding material (SMC) reaches the last roll, the smooth roll can suppress warp (distortion) caused by the projections and depressions.

The smooth roll is preferably the last roll, but the impregnation rolls other than the last roll may include a smooth roll. In a case where the smooth roll is not the last roll, an impregnation roll disposed in the latter half of the impregnation rolls may be smooth.

In the method for manufacturing a fiber-reinforced composite material of the present invention, among the projecting and depressed grooves, a projection having a width larger than the width of a depression may be used, or among the projecting and depressed grooves, a projection having a width smaller than the width of a depression may be used.

At least two impregnation rolls adjacent to each other among the impregnation rolls have projecting and depressed grooves on respective surfaces, and between a projection and a projection on a surface of one of the two impregnation rolls adjacent to each other, a projection on a surface of the other of the two impregnation rolls adjacent to each other is disposed, and it is preferable that among the projecting and depressed grooves, a projection may have a width either larger or smaller than the width of a depression, because if so, a pressure on the laminate surface in contact with the impregnation rolls is distributed, and occurrence of a projection and depression pattern resulting from the impregnation rolls can be suppressed. In particular, it is preferable that among the projecting and depressed grooves, a projection has a width larger than the width of a depression, because if so, the contact area between the impregnation roll and the laminate is larger, so that the pressure is more distributed and occurrence of a projection and depression pattern can be suppressed.

In the method for manufacturing a fiber-reinforced composite material of the present invention, it is preferable that the projection has a width increasing in the advancing direction.

At least two impregnation rolls adjacent to each other among the impregnation rolls have projecting and depressed grooves on respective surfaces, and between a projection and a projection on a surface of one of the two impregnation rolls adjacent to each other, a projection on a surface of the other of the two impregnation rolls adjacent to each other is disposed, and it is preferable that the projection has a width increasing in the advancing direction, because if so, a pressure on the laminate surface in contact with the impregnation rolls is distributed, and occurrence of a projection and depression pattern resulting from the impregnation rolls can be suppressed. On the other hand, it is undesirable if the width of a projection decreases in the advancing direction, because a pressure on the laminate surface in contact with the impregnation rolls increases to induce occurrence of a projection and depression pattern resulting from the impregnation rolls.

### [Impregnation Roll]

The impregnation rolls are not limited, but examples of their material include metal, rubber, and plastic. The projecting and depressed pattern on the surfaces of the impregnation rolls is not limited but may be a groove-like pattern with projections and depressions in the circumferential direction of the roll, or a bar-like, needle-like, or staggered pattern may be provided on the roll surface. Among these, groove rolls are preferred in order to facilitate position control of projections on the surfaces of adjacent impregnation rolls. The projections of the groove rolls may be rounded or may not be rounded in the width direction. The projections of the groove rolls may have a constant width or may have a width increasing in the depth direction.

### [Sheet Molding Compound (SMC)]

As a method of manufacturing the SMC, for example, the components contained in the resin composition are blended and dispersed using an ordinary blender such as a mixer, an intermixer, a planetary mixer, a roll, a kneader, and an extruder, and the resulting resin composition is applied to be a uniform thickness on each of carrier films installed above and below. The reinforcing fibers are sandwiched between the resin compositions on the carrier films installed above and below. Subsequently, the whole is passed between impregnation rolls to impregnate the reinforcing fibers with the resin composition by applying a pressure, and then is rolled. Thereafter, heating (aging) is further performed in the temperature range of 20 to 60°C for 12 to 72 hours to make SMC. Heating (aging) may be performed in multiple temperature ranges. Heating (aging) refers to a range from low temperature (for example, about 20°C) to high temperature (for example, about 60°C), and can be adjusted according to the purpose. The thickness of SMC can be set as appropriate according to desired performance and usage, but preferably 1 mm or more to achieve excellent moldability and strength of cured products, more preferably 1.2 mm or more and particularly preferably 1.5 mm or more. Further, the thickness of SMC is preferably 10 mm or less, more preferably 5 mm or less, and particularly preferably 4 mm or less.

Polyethylene films, polypropylene films, laminated films of polyethylene and polypropylene, polyethylene terephthalate, nylon, and the like can be used as the carrier films.

### [Methods for Manufacturing Molded Article]

The present invention relates to a method for manufacturing a molded article obtained by using the fiber-reinforced composite material described above. In terms of excellent productivity and appearance of a molded article obtained by the method for manufacturing a molded article obtained by using the fiber-reinforced composite material, a molding method therefor is preferably heating compression molding of SMC.

In the heating compression molding, for example, a molded article can be manufactured by weighing a predetermined amount of a molding material such as SMC, putting the material into a mold preheated to 110 to 180°C, clamping the mold in a compression molding machine to shape the molding material, hardening the molding material by holding a molding pressure of 0.1 to 30 MPa, and then removing the resulting molded article.

### [Usage]

The fiber-reinforced composite material of the present invention is excellent in appearance and the like and can be suitably used for automotive parts, railroad vehicle parts, aerospace machine parts, ship parts, housing equipment parts, sports parts, light vehicle parts, construction and civil engineering parts, housings for OA equipment, and the like.

### [Examples]

The present invention will be described in more detail below with specific examples, but these examples should not be construed as being limitative.

### <Hydroxyl Value>

The hydroxyl value was calculated by measuring the number of milligrams of potassium hydroxide (mgKOH/g) required to neutralize the acetic acid formed when 1 g of a resin sample was reacted with an acetylating agent at the specified temperature and time in accordance with the method specified in JIS K-0070.

### <Viscosity>

Viscosity was measured at 25°C using a digital viscometer (VISCO available from ATAGO CO., LTD.).

### (Production of Resin Composition (1))

In a 2 L flask equipped with a thermometer, a nitrogen inlet tube, and a stirrer, 667 parts by mass of an epoxy resin (EPICLON 850 available from DIC Corporation, bisphenol A epoxy resin, epoxy equivalent weight: 188 g/eq), 96.9 parts by mass of bisphenol A, and 0.38 parts by mass of 2-methylimidazole were charged. The temperature was raised to 120°C to allow a reaction to proceed for three hours to obtain an epoxy resin (A) (epoxy equivalent weight: 283 g/eq).

The epoxy resin (A) obtained above was cooled to around 60°C, and then 228 parts by mass of methacrylic acid and 0.29 parts by mass of t-butylhydroquinone were charged. The temperature was raised to 90°C under distribution of a gas mixture of nitrogen and air at a ratio of 1:1. Furthermore, 0.23 parts by mass of 2-methylimidazole was added, and the temperature was raised to 110°C to allow a reaction to proceed for 10 hours. When the acid value became 6 or less, which was the endpoint of the reaction, the reaction was terminated. After cooling to around 60°C, the reaction product was removed from the reaction vessel. Thus, a vinyl ester resin (1) with a hydroxyl value of 206 mgKOH/g was obtained.

To 100 parts by mass of a resin solution obtained by dissolving 55 parts by mass of the vinyl ester resin (1) obtained above in 45 parts by mass of phenoxyethyl methacrylate, 20 parts by mass of a polyisocyanate ("COSMONATE LL" available from Mitsui Chemicals, Inc.) and 1 part by mass of a polymerization initiator ("Kayacarbon AIC-75" available from Kayaku Akzo Corporation, organic peroxide) were blended to obtain a resin composition (1). The viscosity of the resin composition (1) was 3 Pa·s.

### (Example 1)

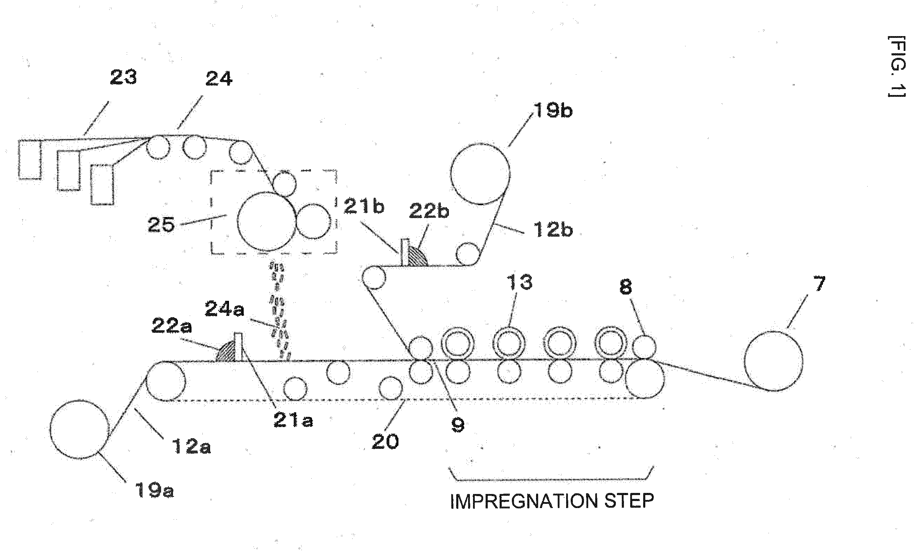

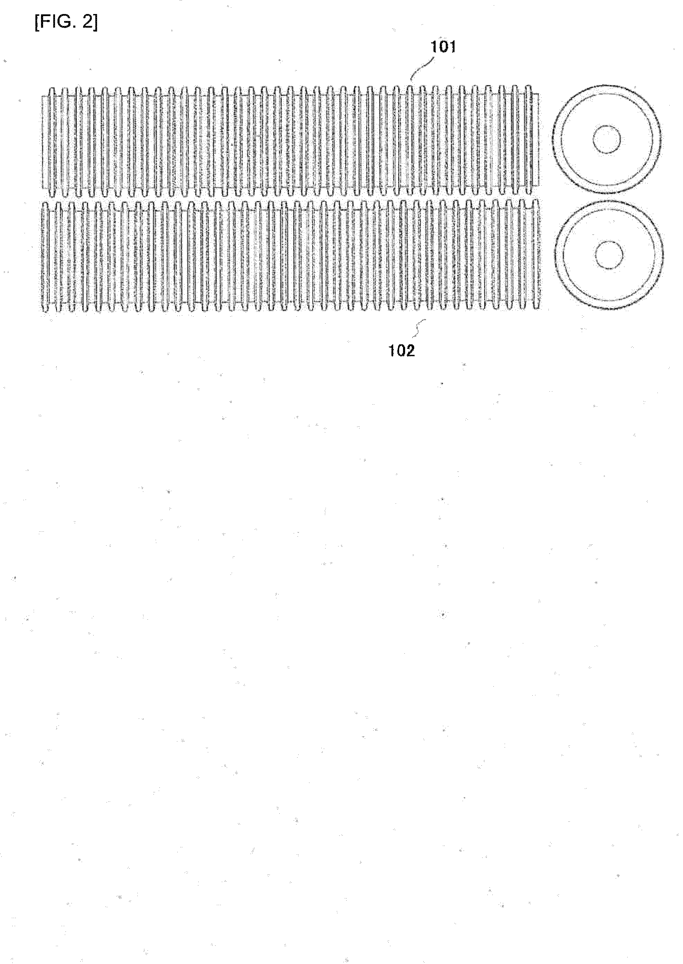

Five impregnation rolls were prepared (see FIG. 1). The first to fourth rolls were groove rolls ("13" in FIG. 1). Four rolls with a plurality of grooves with a projection width of 3 mm, a height of 10 mm, and a depression width of 9 mm in the roll width direction were used. The second roll was installed such that a projection of the second roll was positioned between a projection and a projection adjacent to each other of the first roll when viewed in the vertical direction of the impregnation rolls (see FIG. 2).
Similarly, the third and fourth rolls were disposed such that a projection of the third roll was positioned between a projection and a projection of the second roll, and a projection of the fourth roll was positioned between a projection and a projection of the third roll. A smooth roll with no projections or depressions on the roll surface was used as the fifth roll ("8" in FIG. 1).

The resin composition (1) obtained above was applied to a laminated film of polyethylene and polypropylene ("12a" in FIG. 1) using a resin applicator ("21a" in FIG. 1) so that the amount applied was 0.5 kg/m². Carbon fiber roving ("T700SC-12000-50C" available from Toray Industries, Inc.) ("23" in FIG. 1) was unwound ("24" in FIG. 1) and cut into 25 mm carbon fibers ("24a" in FIG. 1) using a cutter ("25" in FIG. 1). The carbon fibers were dropped evenly from the air onto the laminated film with the resin composition so that the carbon fiber content was 50% by mass with no fiber orientation and with a uniform thickness. Similarly, the resin composition (1) was applied to a laminated film of polyethylene and polypropylene ("12b" in FIG. 1) using a resin applicator ("21b" in FIG. 1) so that the amount applied was 0.5 kg/m². The carbon fibers were sandwiched between the films.

The sandwiched laminate ("9" in FIG. 1) was conveyed by a transfer belt ("20" in FIG. 1) and impregnated using the above five impregnation rolls. After impregnation with the resin composition (1), the laminate was rolled and left (aged) in a thermostatic device at 45°C for 24 hours to obtain a carbon fiber-reinforced composite material (X-1) (SMC) ("7" in FIG. 1) with a thickness of 1.8 mm. The basis weight of this carbon fiber-reinforced composite material (X-1) was 2 kg/m².

After aging and cooling to room temperature (25°C), two 265 mm × 265 mm pieces of the SMC were cut out. The two 265 mm square pieces of SMC were set on top of each other at the center of a 300 mm × 300 mm flat mold and molded at a press mold temperature of 150°C, a press time of 3 minutes, and a press pressure of 10 MPa to obtain a flat plate-shaped molded article with a thickness of approximately 2 mm. No projections or depressions resulting from the groove rolls were observed on the molded article surface.

### (Example 2)

A carbon fiber-reinforced composite material (X-2) (SMC) with a thickness of 1.8 mm was obtained by the same procedure as in Example 1, except that the fourth roll, which was a groove roll, among the five impregnation rolls used in Example 1, was changed to a roll with a plurality of grooves with a projection width of 7 mm, a height of 10 mm, and a depression width of 5 mm. The basis weight of this carbon fiber-reinforced composite material (X-2) was 2 kg/m².

The resulting carbon fiber-reinforced composite material (X-2) was molded by the same procedure as in Example 1 to obtain a flat plate-shaped molded article. No projections or depressions resulting from the groove rolls were observed on the molded article surface.

### (Comparative Example 1)

Five impregnation rolls used in Example 1 were prepared. The second roll was installed such that a projection of the first roll and a projection of the second roll overlapped each other at the same position when viewed in the vertical direction of the impregnation rolls. Similarly, the third roll was installed such that a projection of the third roll overlapped with the position of a projection of the second roll. The fourth roll was also installed such that the fourth roll overlapped with the position of a projection of the third roll. A smooth roll with no projections or depressions on the roll surface was used as the fifth roll.

A carbon fiber-reinforced composite material (X-3) (SMC) with a thickness of 1.8 mm was obtained by the same procedure as in Example 1, except that the positions of projections of the first to fourth rolls, which were groove rolls, among the five impregnation rolls used in Example 1, were set to the same position. The basis weight of this carbon fiber-reinforced composite material (X-3) was 2 kg/m².

The resulting carbon fiber-reinforced composite material (X-3) was molded by the same procedure as in Example 1 to obtain a flat plate-shaped molded article. Projections and depressions resulting from the groove rolls were observed on the molded article surface.

The above evaluation results have indicated that in Examples 1 and 2, the projections of adjacent impregnation rolls are disposed at respective different positions whereby a pressure based on the projections of the impregnation rolls is distributed over the laminate impregnated with the resin composition, thereby suppressing occurrence of a projection and depression pattern resulting from groove rolls in the flat plate-shaped molded article obtained from the laminate. In particular, in Example 2 in which the width of a projection of the projecting and depressed grooves of the impregnation roll is larger than the width of a depression, a section between a projection and a projection of the third roll is impregnated by a projection of the fourth roll, whereby the carbon fiber-reinforced composite material can be smoothed, thereby eliminating occurrence of a projection and depression pattern in the flat plate-shaped molded article, and excellent appearance was observed.

On the other hand, in Comparative Example 1, since the projections of adjacent impregnation rolls were disposed at the same respective positions, the pressure based on the projections of the impregnation rolls increased, and in spite of using a smooth roll as the final roll, occurrence of a projection and depression pattern was found in the resulting flat plate-shaped molded article, and poor appearance was observed.

### Reference Signs List

- 7: SMC
- 8: smooth roll
- 9: laminate
- 12a, 12b: laminated film (carrier film)
- 13: impregnation roll
- 19a, 19b: unwinder
- 20: transfer belt
- 21a, 21b: resin applicator
- 22a, 22b: resin composition (resin paste)
- 23: roving
- 24: strand
- 24a: chopped strand
- 25: cutter
- 101: first roll
- 102: second roll

## Claims

1. A method for manufacturing a fiber-reinforced composite material by impregnating reinforcing fibers with a resin composition, the method comprising steps of:
laminating the reinforcing fibers and the resin composition on a carrier film to prepare a laminate; and
pressing and advancing the laminate while rotating a plurality of impregnation rolls to impregnate the reinforcing fibers with the resin composition, wherein
at least two impregnation rolls adjacent to each other among the impregnation rolls have projecting and depressed grooves on respective surfaces,
between a projection and a projection on a surface of one of the two impregnation rolls adjacent to each other, a projection on a surface of the other of the two impregnation rolls adjacent to each other is disposed, and
the impregnation rolls are substantially on a same plane.

2. The method for manufacturing a fiber-reinforced composite material according to claim 1, further comprising a step of heating after impregnating the reinforcing fibers with the resin composition.

3. The method for manufacturing a fiber-reinforced composite material according to claim 1 or 2, wherein among the impregnation rolls, a last roll in a direction of the advancing has a smooth surface.

4. The method for manufacturing a fiber-reinforced composite material according to any one of claims 1 to 3, wherein among the projecting and depressed grooves, a projection has a width larger than a width of a depression.

5. The method for manufacturing a fiber-reinforced composite material according to any one of claims 1 to 3, wherein among the projecting and depressed grooves, a projection has a width smaller than a width of a depression.

6. The method for manufacturing a fiber-reinforced composite material according to any one of claims 1 to 5, wherein the projection has a width increasing in a direction of the advancing.

7. A fiber-reinforced composite material obtained by the method for manufacturing a fiber-reinforced composite material according to any one of claims 1 to 6.

8. A method for manufacturing a molded article obtained by using the fiber-reinforced composite material according to claim 7.
